# EUROPEAN PATENT SPECIFICATION

(11) **EP 0 830 274 B1**
(45) Date of publication and mention of the grant of the patent: **08.11.2000**
(21) Application number: 96918765.7
(22) Date of filing: 19.06.1996
(51) Int. Cl.: B60S 9/08

(54) **A SUPPORT LANDING SYSTEM FOR A VEHICLE**
ABSTÜTZEINRICHTUNG EINES FAHRZEUGS
SYSTEME DE SUPPORT AU SOL DESTINE A UN VEHICULE

(30) Priority: 19.06.1995 GB 9512425
(43) Date of publication of application: 25.03.1998
(73) Proprietor: Busby, Philip Victor, Pembroke Dock, Pembrokeshire SA72 6YD (GB)
(72) Inventor: Busby, Philip Victor, Pembroke Dock, Pembrokeshire SA72 6YD (GB)
(74) Representative: Johnson, Terence Leslie
(86) International application number: GB9601470
(87) International publication number: WO9700185

(56) References cited:
- EP-A- 0 179 632
- EP-A- 0 654 385
- US-A- 5 299 829
- US-A- 5 451 076
- PATENT ABSTRACTS OF JAPAN vol. 015, no. 160 (M-1105), 22 April 1991 & JP,A,03 031044 (YASUMOTO HIRAYASU), 8 February 1991,

## Description

The invention relates to apparatus for providing adaptability of a power system for support landing system for a vehicle, particularly a trailer having supports in the form of legs, usually at the front, (though they could be fore and aft or just aft), which are lowered to support the trailer when a tractor unit by which the trailer is drawn is unhitched and driven away. Such apparatus usually comprises a check valve and connection means for connecting the apparatus with a drive device of a support (leg) landing system. Such a system can be an air powered system carried on board the trailer. A good example is the well-known and proven BUZZLIFT (Trade Mark) system, described and claimed in EP-A-0179632 of the present Applicant.

Similar systems are shown in US-A-5299829 and US-A-5451076, all of which systems are well known and proven, and are in effect dedicated to a particular landing system. That this is necessarily so hitherto will be understood when one considers that a trailer is designed and built by a body builder, who tenders for equipment to be incorporated in the design, such as tail-gates, suspension, king-plate connection, brakes, and landing leg systems.

This therefore limits possibilities for add-on systems such as BUZZLIFT for operating a landing leg system.

It is accordingly an object of the invention to seek to mitigate this disadvantage.

According to a first aspect of the invention there is provided apparatus for providing adaptability of a power system for a support landing system of a vehicle such as a trailer, comprising a check valve and connection means, characterised by a support plate for a power system, by a further support plate defining a plurality of locations of a tubular support collar for the power system, whereby the apparatus is connectable with different power systems for the support landing system.

The check valve may comprise a one way valve connected between an air reservoir of the power system for the landing system and pressure sensitive valve of a braking system of the vehicle. This provides a relatively simple operation.

The check valve may be operable by a manual shut-off valve in the line between the pressure sensitive valve and the one way valve. This again provides a relatively simple construction. This one way valve may comprise a manually operable valve.

The connection means may be slidable and may comprise a first support tube carried by the power system and a second support tube carried by a drive device, the first and second tubes being slidably connectible. This provides a relatively rapid conversion. The first tube may be slidably received within the second tube. This provides for positive location.

The first and second tubes may provide for a push/pull gear change. This enhances the adaptability of the system. The first tube may be threadingly carried by a threaded tubular collar. This provides for adaptability, particularly when there is a support plate for the tubular support collar having a variety of locations therefor whereby to provide adaptability of connection.

The support plate suitably comprises a rear plate of the power unit of the system.

There may be an air motor and a drive housing, a respective major axis of the motor and housing being substantially at right angles. This provides for ease of assembly, particularly as the air motor may be slidably mounted with the housing, and may be connected by a single clamp means.

According to a second aspect of the invention there is provided a vehicle such as a trailer, including apparatus as hereinbefore defined.

The apparatus may be operable remotely by actuating means.

Using apparatus embodying the invention it is possible to provide substantial universitality of application of a landing leg system. Stated in another way, the power system can be applied to most if not all landing leg systems, whereby adaptability and versatility may be achieved.

Apparatus embodying the invention is hereinafter described, by way of example, with reference to the accompanying drawings.
Figures 1 and 2 show schematically a first embodiment of power system according to the invention;
Figures 3 and 4 shows schematically a second embodiment of power system according to the invention;
Figures 5 and 6 show a third embodiment of power system according to the invention;
Figure 7 shows a detail to an enlarged scale of a connection of the system of Figures 1 to 6 to a landing gear system such as a "Jost" system;
Figure 8 shows a 90° gear box connection of the system;
Figure 9 shows an elevational view of a plate for use in the system, for different landing gear systems;
Figures 10, 10A and 10B show an exploded view and details respectively of a power unit of a system according to the invention;
Figures 11, 11A and 11B show an exploded view and details of another power unit of a system according to the invention; and
Figure 12 shows a modified air motor for use with apparatus according to the invention; and
Figure 13 shows a side elevational view of a trailer on which apparatus according to the invention is mounted.

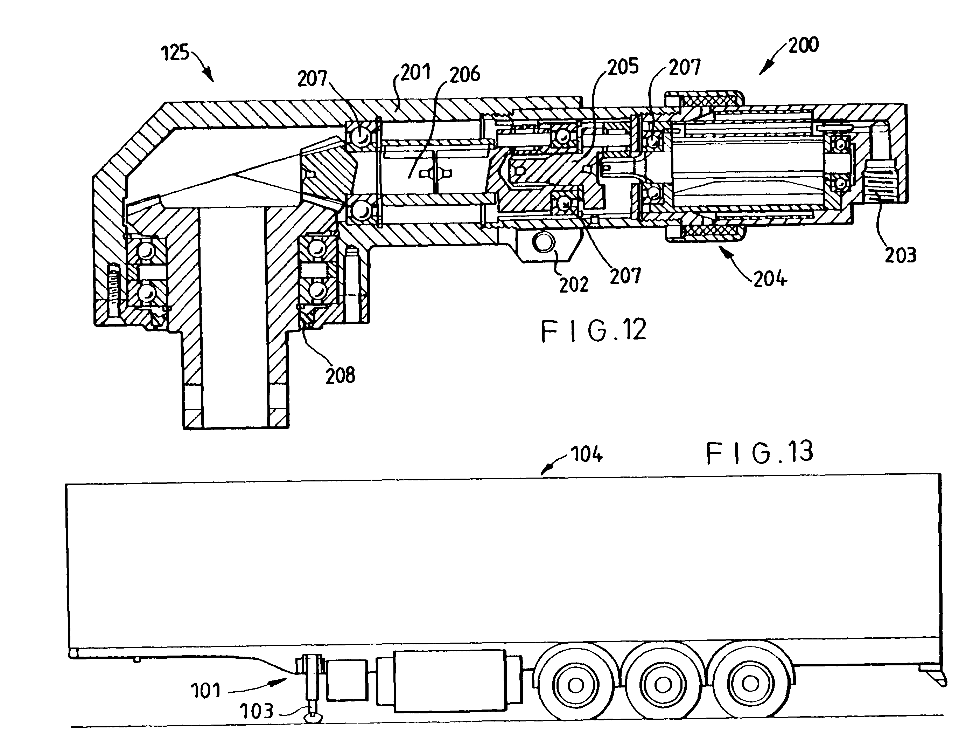

Referring to the drawings, in which like parts are indicated by like reference numerals, there is shown apparatus 100 for providing adaptability of a power system 101 for a support landing system, such as landing legs 103 of a trailer 104 (drawn by a tractor unit, not shown) (Figure 13), comprising a check valve and slidable connection means whereby the apparatus 100 is connectible with different drive devices for the support (leg) landing system.

Referring to the Figures, the trailer 104 has an on board braking system of a known kind, including a spring brake control valve 1, a relay valve 2, a line filter 3, air reservoirs 4 carried on board, four spring brake and service brake chambers 5 (one for each wheel or wheel set) and a usual hand operable switch or valve 6.

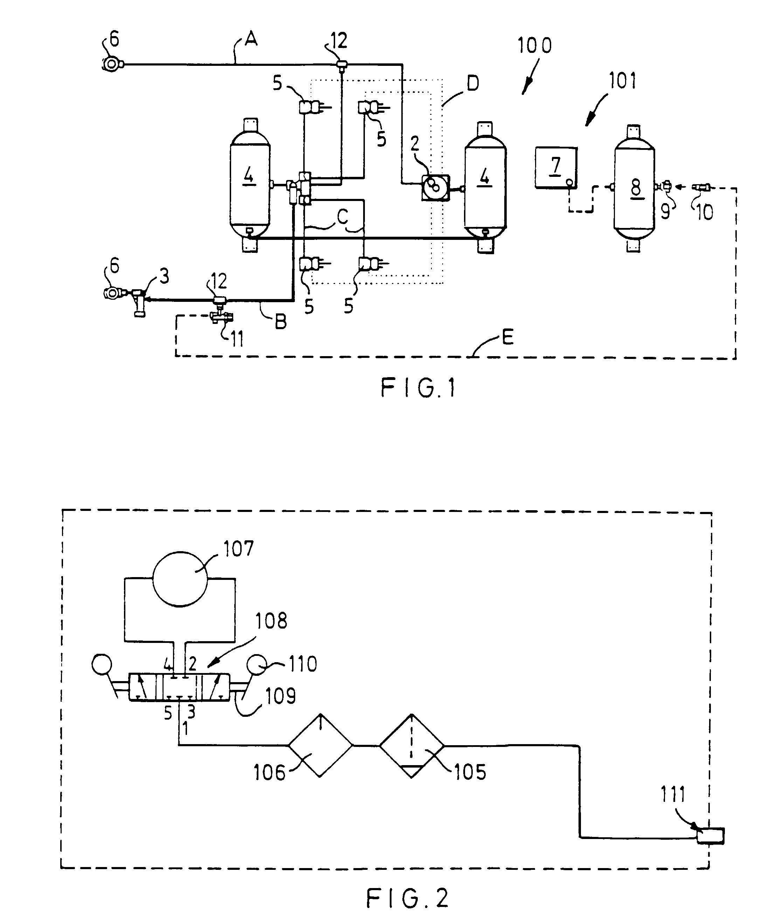

The landing legs 103 are operable by an air system 101 which includes a power pack or unit 7 (Figure 1) connected pneumatically in series with an air reservoir 8, a check valve 9, in the embodiment a single one way check valve, a manual shut off valve 10, and a brake pressure protection valve 11 connected into the pneumatic braking system near the line filter 3 by a T-piece 12.

In the embodiment various fluid lines are identified as 'A', 'B', 'C', 'D', and 'E', 'A' being a control line, 'B' an air supply line, 'C' being an air line to spring brakes 5, 'D' being a service brake line and 'E' an air line in a landing leg system of the trailer, such as a BUZZLIFT system.

The brake protection valve 11 is operable in the embodiment at 4.574 kg/cm² (65 psi) (though it will be understood that it could be set at a higher or lower pressure as desired) so if there is a pressure loss between the system and the brake protection valve, that brake protection valve 11 will close down to protect the landing leg system from the braking system, thus safe-guarding the integrity of the braking system. The manual shut off valve 10 is a ball valve. The check valve 9 is operable to disconnect the landing leg system from downstream of operable switch or valve hand 6, so that there is always air in the landing leg system when the valve is shut off, therefore retaining availability, and there is no requirement for re-charging the landing leg system, in which, in the embodiment, the air reservoir has a capacity of 60 litres (though it could be more or less). The air lines of the leg landing system comprise conduiting which is in the embodiment of no less than 10mm inner diameter, thereby providing a virtually uninterrupted flow of air to the system 101. The power unit 7 includes an air filter, in the embodiment a 5 micron air filter, which provides a drop of oil every 15 sec. for lubrication via the oil lubrication 106.

An air motor 107 of the power unit 7 is connected to a lever operated three position valve 108 which is self-centering and which has a spool 109 which is automatically returnable and biassed toward a central off position. The valve 108 may be operated manually by a lever 110 or by remote control, for example by a solenoid system (not shown). The power unit 7 is operable by a connector 111, located at the rear (in use) of the basic landing leg equipment housing, of the vehicle, and comprises a straight through connector, which allows the air line from the air tank to be connected to the landing leg system.

It will be understood that in use in the embodiment of Figure 1, the air tank 8 would be mounted as far forward as possible on the trailer to be as close as possible to the tractor unit and hence the air supply of the system.

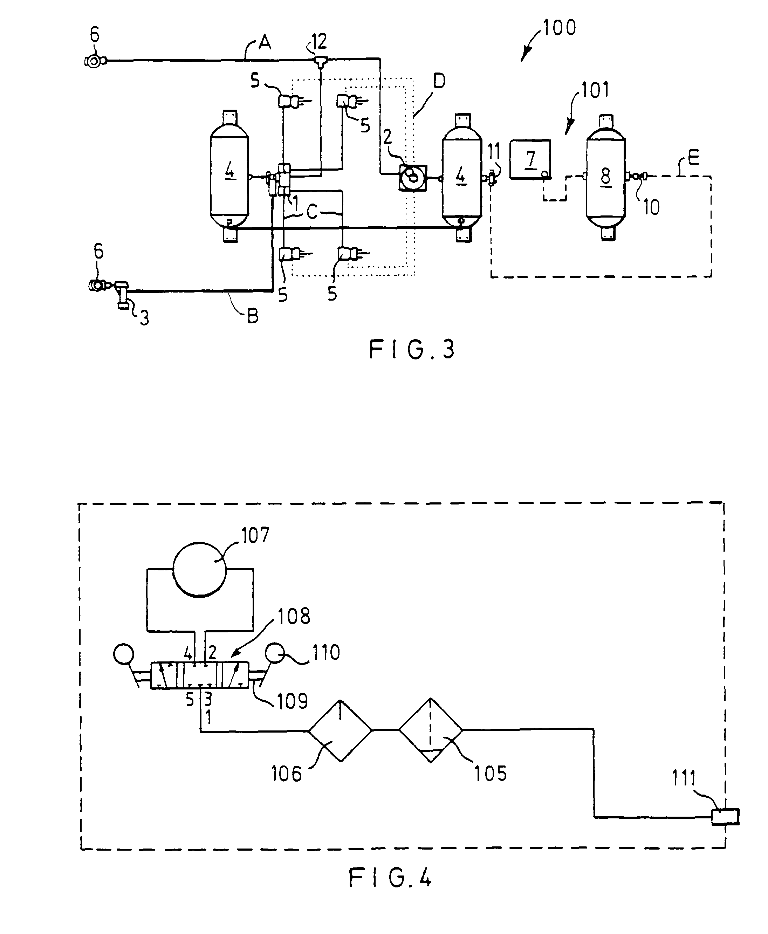

In contrast in the apparatus of Figures 3 and 4 the air tank 8 is mounted where convenient, the valve 11 in this case being mounted on an air tank of the trailer, thereby increasing the amount of air available to the landing leg system. The air tank would generally be to the rear of the trailer. The power pack 7 is similar to that of Figure 2.

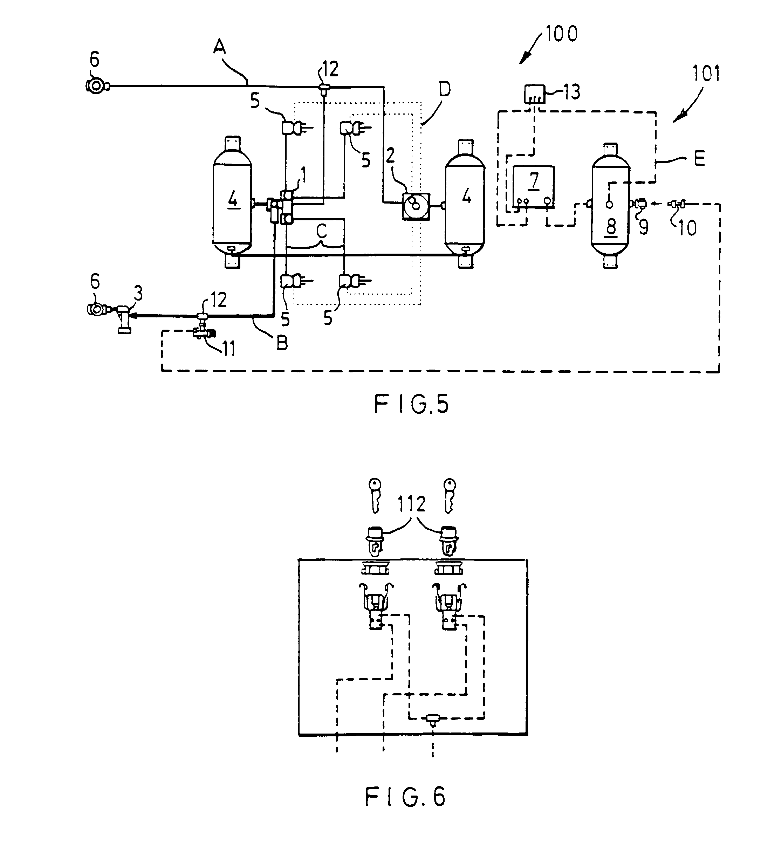

The apparatus of Figures 5 and 6 is similar to that of Figures 1 and 2 except that in this embodiment there is an additional control unit or box 13 for the landing leg air system which enables that system to be mounted at the rear of the trailer 104, the unit 13 being mounted forwardly of the rear axle in the embodiment, though it will be understood that it could be mounted anywhere on the trailer 104. This provides for accessibility by an operator since the trailer can be backed into positions with difficult access, but the unit 13 is always accessible. The control unit 13 has two key- (or push button) operated directional control valves 112 for providing air supply to the pilot, lever operated, control valve 108 in the power unit 7 of the leg landing system 101.

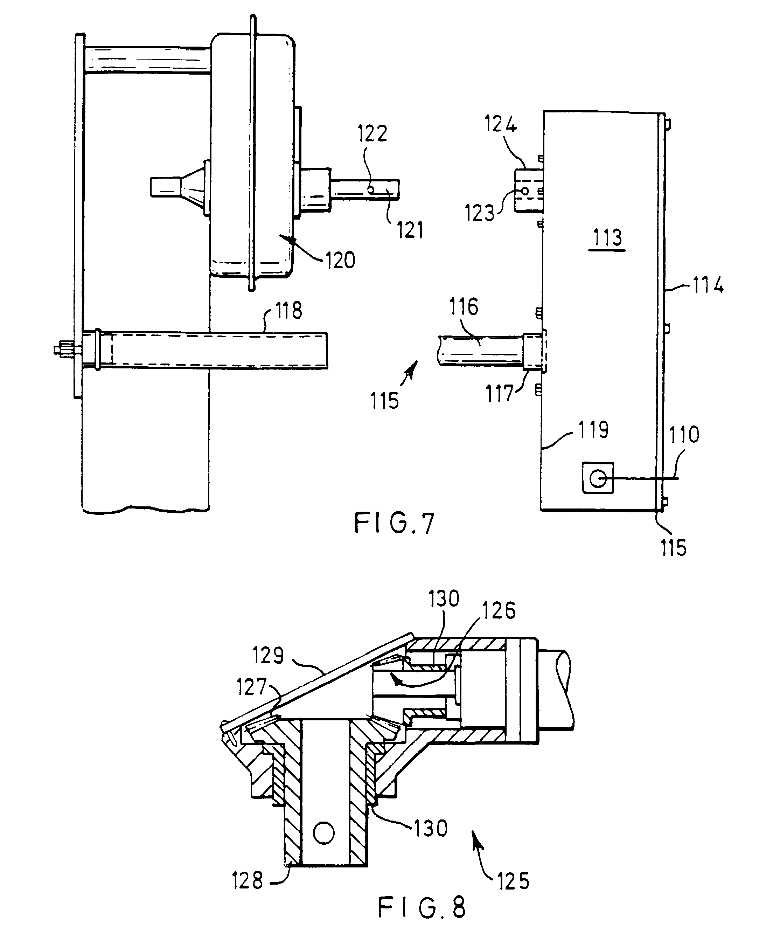

The power unit 7 includes a box or housing 113 (Figure 7) having a forward or outer plate or cover 114 closing the interior via a seal 115. The operating lever 110 for the three position valve is accessible from a side of the housing 113 through orifice 110', and from the rear there is accessible the slidable connection 115, in the form in the embodiment of a first or inner support tube 116 which is mounted on a threaded tube and collar 117 and which receives slidably externally an outer support tube 118 mounted on a back plate 119. The slidable connector 118 provides for a push-pull gear change. The landing gear actuator 120, 121 has a shaft 14 for connection by a high tensile bolt (not shown) passing into alignable holes 122, 123 with a combined coupling and bevel gear take off 124 from a right angle gear box 125 (Figure 8) in the unit 7, one gear 126 being rotatable by the air motor 107 of the leg landing air system and this gear 126 meshing at 90° with a gear 127 having an output shaft 128 passing to the coupling 124. There is a cover for the gear box 129 and suitable seals 130.

There is a remote winding handle (not shown) for manual operation of the leg landing system.

By using the sliding connection 115 and mounting bolt, conversion from manual to power operation, and vice versa can be achieved in no more than half an hour, a considerable saving in time in conversion. This is effected by turning the ball valve 10 off to isolate the leg landing system, removing the bolt between the shaft 121 and coupling 124, and sliding off the outer or second support tube 118 then also sliding off the inner or first support tube 116. The system can lift 24970 kg (55,000 lbs), and drop 12" (30.48cm) in 15 seconds.

The gear ratio of the coupling provides in the embodiment a 3.5 : 1 reduction, particularly for a "Jost" landing leg system including a shaft 121 (Fig. 7).

2½ revolutions of a Jost E-200 driveshaft 121 in high gear, equals 25mm distance travel of the leg (raising or lowering).

25 revolutions of a Jost E-200 drive shaft 121 in low gear, equals 25mm distance travel of the leg (raising or lowering).

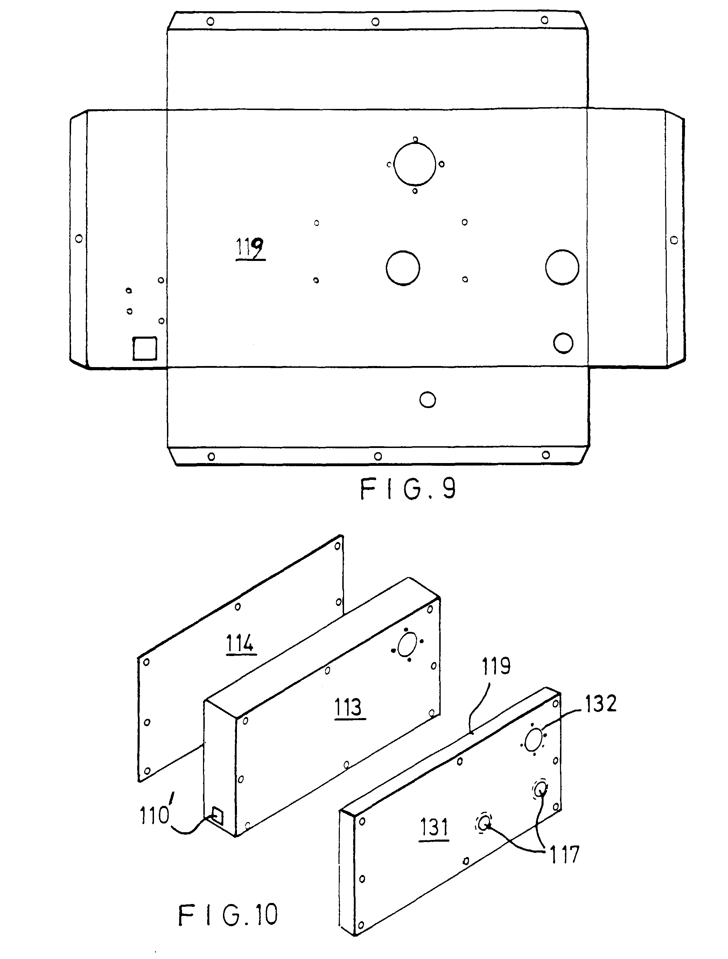

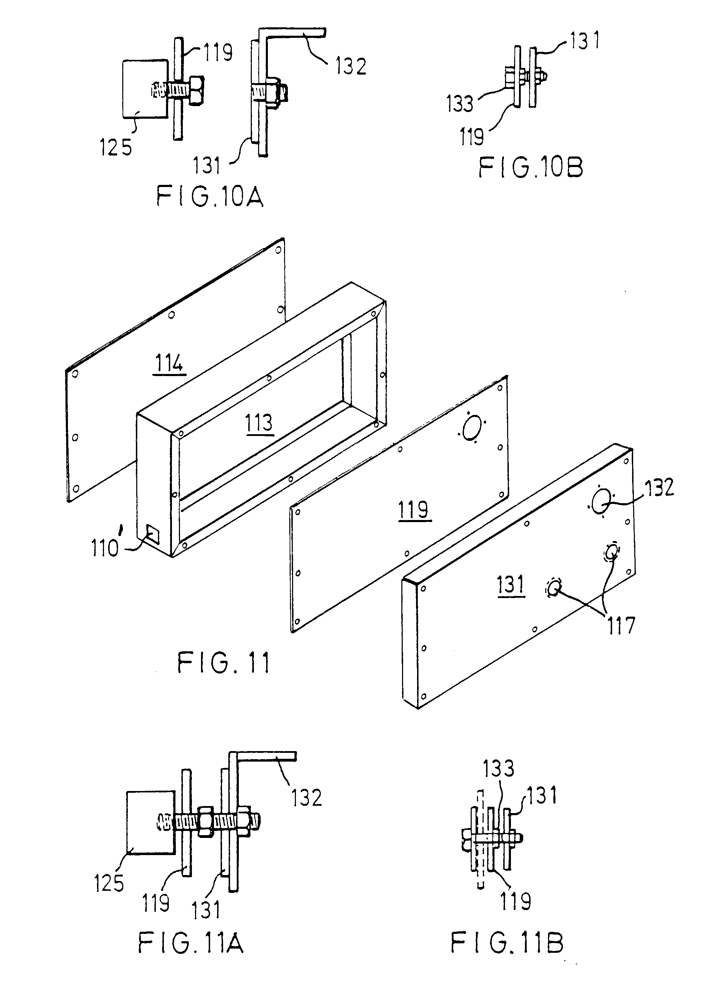

Figures 10 and 10A, 10B and 11, 11A and 11B show different arrangements of power unit 7 of the apparatus 100 embodying the invention, there being an adaptor or swap plate 131 on the rear, which carries a right angle finger guard 132 and, more importantly, allows the tube support collars 117 to be positioned variously over the surface area of the plate 131 thereby to allow the apparatus 100 to be connectible with different drive devices for the leg landing system. Thus the air motor 107 and right angle drive gear box 125 are mountable at one fixed standard position on the housing 113 or back plate 119. The tube support arrangement is in the form of two tube support tube collars 117 and two support tubes and can be secured as by welding at various desired positions. The plates 131 have different dimensions, all being mountable on the power unit 7, as shown in Figures 9 to 11, the plates having widths of 500-532mm for example, as shown. It will be understood that for providing protection from din, foreign bodies and the like. there may be provided a flexible hose, sleeve or the like, for example about 6" (15.24cm) length which slides over the slidable connection.

The air motor 107 of the unit 7 is mounted on the back plate of the housing, and there is a straight adaptor connection between the 90° gear box and the adaptor plate, there being a space between the back plate and the adaptor plate, provided by a nut 133, to enable the collars 117 to be fined for the different tube supports thereby providing the adaptability of the apparatus 100 (Figures 10, 10A and 10B, and Figures 11, 11A and 11B).

Although a slidable connection means has been disclosed, it will be understood that other connection means, for example interlocking gears or spiders may be envisaged and are contemplated within the scope of the invention. Moreover, the air motor 107 may be replaced by any suitable means, for example a hydraulic motor. Thus, in Figure 12, there is shown an embodiment of an air motor 200 which slides into the right angle drive housing 201 of the right angle gear box 125 and is retained in place by a single bolt clamp 202 which has been formed by being machined into the right angle drive housing. This reduces the assembly time to join the air motor to the right angle drive gear box 120 by 80% over the usual assembly time. There are air inlet connections 203, and a silencer 204, the air motor 200 having a push-fit slidable drive connection of its output shaft 205 with the input shaft 206 of the right angle gear box 125.

The embodiment of clamping the air motor into place in the drive housing as shown serves two purposes, namely that reducing assembly time, and enabling the air inlets of the air motor to be located in position in a 360 degree circle, to suit any application. This can be achieved by simply slackening the clamp on the right angle drive, and twisting the air motor to the desired orientation, and then retightening the clamp.

The right angle drive has bearings 207 instead of brass bushes, and incorporates a seal 208 on the drive shaft coupling which provides weather-proofing for the gearbox 125.

The air motor shown, importantly, has about ten percent more power in one direction than the other.

The reason for doing this is that when the landing legs 103 are lowered on any landing system, the manual drive shaft has to be turned in a clockwise direction, which will in effect raise the trailer 104.

To lower the trailer, the drive shaft is turned in the opposite direction, which will in effect raise the legs, but lower the trailer. It is in general, easier to lower something than it is to lift it, and this applies to the trailer, which will require in the region of 20% less effort to lower the trailer 104 than is required to raise it.

Hence, by developing an air motor with ten percent more power in one direction, there is provided a unit which is able to lift the same amount of weight in both directions, but with the ability to lift 10% more weight than it would normally be able to do.

As an example, a known system had a 0.5 kW (.70 hp) airmotor, while the air motor of Figure 12 is 0.6 kW (.81 hp).

The air motor and right angle drive unit of Figure 12, is as compared with a known motor:-
24% faster in high gear.
30% faster in low gear under load.
able to lift fifty percent more weight.
able to lift weight twice the distance on the same amount of air available.

Apparatus as herein described with reference to the drawings was shown to be durable with no wear and with little wear on the right angle drive. The plate 131, a "swap" plate, enables the apparatus readily to be coupled with any drive system thereby allowing for use with any landing leg system. Thus by mounting the air motor 107, gear box 125 etc. on the plate 131, it is possible to connect up with different landing leg systems as described.

## Claims

1. Apparatus (100) for providing adaptability of a power system (101) for a support landing system (103) of a vehicle such as a trailer (104), comprising a check valve (9) and connection means, characterised by a support plate (119) for a power system (107), by a further support plate (131) defining a plurality of locations (117) of a tubular support collar for the power system (107). whereby the apparatus (100) is connectable with different power systems for the support landing system.

2. Apparatus according to Claim 1, characterised by check valve (9) comprising a one way valve connected between an air reservoir (8) of the power system (107) for the landing system and by a pressure sensitive valve (11) of a braking system of the vehicle.

3. Apparatus according to Claim 2, characterised by the check valve (9) being operable by a manual shut off valve (10) in the line between the pressure sensitive valve and the one way valve.

4. Apparatus according to Claim 3, characterised by the one way valve (9) comprising a manually operable valve.

5. Apparatus according to any preceding claim, characterised by the connection means (115) being slidable and comprising a first support tube (116) carried by the power system (107) and a second support tube (118), and by the first and second tubes (116, 118) being slidably connectible.

6. Apparatus according to Claim 5, characterised by the first tube (116) being slidably received within the second tube (118).

7. Apparatus according to Claim 6, characterised by the first and second tubes (116, 118) providing for a push/pull gear-change.

8. Apparatus according to Claim 6 or Claim 7, characterised by the first tube (116) being threadingly carried by a threaded tubular support collar (117).

9. Apparatus according to any preceding claim, characterised by the support plate (131) comprising a rear plate of a power unit of the system.

10. Apparatus according to Claim 9, characterised by the support plate (131) mounting a finger guard.

11. Apparatus according to any preceding claim, characterised by an air motor (107) and a drive housing (113) and by a respective major axis of the motor and of the housing being substantially at right angles.

12. Apparatus according to Claim 11, characterised by the air motor (107) being slidably mounted with the housing (113).

13. Apparatus according to Claim 12, characterised by the air motor (107) and housing (113) being connected by a single clamp means (122, 123).

14. A vehicle (104) such as a trailer, characterised by including apparatus (100) according to any preceding claim.

15. A vehicle according to Claim 14, characterised by the apparatus (100) being operable remotely by actuating means.

## Patentansprüche

1. Vorrichtung (100) zum Bereitstellen der Anpassungsfähigkeit einer Kraftanlage (101) für ein Stützeinrichtungssystem (103) eines Fahrzeugs wie einem Anhänger (104), die ein Rückschlagventil (9) und ein Anschlussmittel aufweist, gekennzeichnet durch eine Stützplatte (119) für eine Kraftanlage (107), durch eine weitere Stützplatte (131), die eine Mehrzahl von Stellen (117) eines rohrförmigen Stützrings für die Kraftanlage (107) definiert, wodurch die Vorrichtung (100) an verschiedene Kraftanlagen für das Stützeinrichtungssystem anschließbar ist.

2. Vorrichtung nach Anspruch 1, dadurch gekennzeichnet, dass das Rückschlagventil (9) ein Einwegventil aufweist, das zwischen einem Luftbehälter (8) der Kraftanlage (107) für das Stützsystem und einem druckempfindlichen Ventil (11) einer Bremsanlage des Fahrzeugs angeschlossen ist.

3. Vorrichtung nach Anspruch 2, dadurch gekennzeichnet, dass das Rückschlagventil (9) durch ein Handabsperrventil (10) in der Leitung zwischen dem druckempfindlichen Ventil und dem Einwegventil betätigt werden kann.

4. Vorrichtung nach Anspruch 3, dadurch gekennzeichnet, dass das Einwegventil (9) ein von Hand bedienbares Ventil umfasst.

5. Vorrichtung nach einem der vorangehenden Ansprüche, dadurch gekennzeichnet, dass das Anschlussmittel (115) gleitbar ist und ein erstes, von der Kraftanlage (107) getragenes Stützrohr (116) und ein zweites Stützrohr (118) aufweist, und dadurch, dass das erste und das zweite Rohr (116, 118) gleitbar verbindbar sind.

6. Vorrichtung nach Anspruch 5, dadurch gekennzeichnet, dass das erste Rohr (116) gleitbar in dem zweiten Rohr (118) aufgenommen wird.

7. Vorrichtung nach Anspruch 6, dadurch gekennzeichnet, dass das erste und das zweite Rohr (116, 118) für ein Druck-Zug-Umschalten sorgt.

8. Vorrichtung nach Anspruch 6 oder Anspruch 7, dadurch gekennzeichnet, dass das erste Rohr (116) gewindemäßig von einem gewindeten röhrenförmigen Stützring (117) getragen wird.

9. Vorrichtung nach einem der vorangehenden Ansprüche, dadurch gekennzeichnet, dass die Stützplatte (131) eine Rückplatte einer Krafteinheit des Systems umfasst.

10. Vorrichtung nach Anspruch 9, dadurch gekennzeichnet, dass die Stützplatte (131) einen Fingerschutz trägt.

11. Vorrichtung nach einem der vorangehenden Ansprüche, gekennzeichnet durch einen Druckluftmotor (107) und ein Antriebsgehäuse (113) und dadurch, dass eine Hauptachse des Motors und eine Hauptachse des Gehäuses weitgehend im rechten Winkel zueinander stehen.

12. Vorrichtung nach Anspruch 11, dadurch gekennzeichnet, dass der Druckluftmotor (107) gleitbar am Gehäuse (113) montiert ist.

13. Vorrichtung nach Anspruch 12, dadurch gekennzeichnet, dass der Druckluftmotor (107) und das Gehäuse (113) durch eine einzelne Klemmeinrichtung (122, 123) miteinander verbunden sind.

14. Fahrzeug (104), wie ein Anhänger, dadurch gekennzeichnet, dass es eine Vorrichtung (100) nach einem der vorangehenden Ansprüche aufweist.

15. Fahrzeug nach Anspruch 14, dadurch gekennzeichnet, dass die Vorrichtung (100) durch eine Betätigungseinrichtung fernbedienbar ist.

## Revendications

1. Appareil (100) pour assurer l'adaptabilité d'un système d'alimentation (101) pour un système de béquille (103) d'un véhicule tel qu'une remorque (104), comprenant une vanne de contrôle (9) et un moyen de connexion, caractérisé par une plaque de support (119) pour un système d'actionnement (107), par une plaque de support supplémentaire (131) définissant une pluralité d'emplacements (117) d'un collier de support tubulaire pour le système d'actionnement (107) de telle sorte que l'appareil (100) puisse être connecté à différents systèmes d'alimentation pour le système de béquille.

2. Appareil selon la revendication 1, caractérisé en ce que la vanne de contrôle (9) comprend une vanne une voie connectée entre un réservoir pneumatique (8) du système d'actionnement (107) pour le système de béquille et une vanne sensible à la pression (11) d'un système de freinage du véhicule.

3. Appareil selon la revendication 2, caractérisé en ce que la vanne de contrôle (9) peut être activée par une vanne d'arrêt manuelle (10) dans la ligne entre la vanne sensible à la pression et la vanne une voie.

4. Appareil selon la revendication 3, caractérisé en ce que la vanne une voie (9) comprend une vanne activable manuellement.

5. Appareil selon l'une quelconque des revendications précédentes, caractérisé en ce que le moyen de connexion (115) peut coulisser et comprend un premier tube de support (116) porté par le système d'actionnement (107) et un second tube de support (118) et en ce que les premier et second tubes (116, 118) sont connectables de façon coulissante.

6. Appareil selon la revendication 5, caractérisé en ce que le premier tube (116) est reçu de façon coulissante à l'intérieur du second tube (118).

7. Appareil selon la revendication 6, caractérisé en ce que les premier et second tubes (116, 118) sont prévus pour un système d'engrenage push/pull.

8. Appareil selon la revendication 6 ou 7, caractérisé en ce que le premier tube (116) est porté par vissage par un collier de support tubulaire fileté (117).

9. Appareil selon l'une quelconque des revendications précédentes, caractérisé en ce que la plaque de support (131) comprend une plaque arrière d'une unité d'alimentation du système.

10. Appareil selon la revendication 9, caractérisé en ce que la plaque de support (131) reçoit en montage un protège-doigts.

11. Appareil selon l'une quelconque des revendications précédentes, caractérisé par un moteur pneumatique (107) et par un boîtier d'entraînement (113) et en ce que l'axe principal respectif du moteur et du boîtier sont sensiblement à angle droit.

12. Appareil selon la revendication 11, caractérisé en ce que le moteur pneumatique (107) est monté de façon coulissante avec le boîtier (113).

13. Appareil selon la revendication 12, caractérisé en ce que le moteur pneumatique (107) et le boîtier (113) sont connectés par un unique moyen de fixation (122, 123).

14. Véhicule (104) tel qu'une remorque, caractérisé en ce qu'il inclut un appareil (100) selon l'une quelconque des revendications précédentes.

15. Véhicule selon la revendication 14, caractérisé en ce que l'appareil (100) peut être activé à distance par un moyen d'actionnement.
